# EUROPÄISCHE PATENTSCHRIFT

(11) **EP 2 199 625 B1**
(45) Veröffentlichungstag und Bekanntmachung des Hinweises auf die Patenterteilung: **12.09.2012**
(21) Anmeldenummer: 09179413.1
(22) Anmeldetag: 16.12.2009
(51) Int. Cl.: F16B 11/00, F16B 13/14

(54) **Klebedübel**
Adhesive dowel
Cheville adhésive

(30) Priorität: 22.12.2008 DE 202008016855 U; 04.03.2009 DE 202009002923 U
(43) Veröffentlichungstag der Anmeldung: 23.06.2010
(73) Patentinhaber: Hettich-Heinze GmbH & Co. KG, 32139 Spenge (DE)
(72) Erfinder: Sobolewski, Uwe, 32257 Bünde (DE); Andschus, Stefan, 32312 Lübbecke (DE)
(74) Vertreter: Dantz, Jan Henning

(56) Entgegenhaltungen:
- EP-A2- 0 651 100
- DE-A1-102008 024 321
- DE-U1-202008 001 093

## Beschreibung

Die Erfindung betrifft einen Klebedübel nach dem Oberbegriff des Anspruches 1.

Zum technologischen Hintergrund des Standes der Technik seien zunächst die EP 0 651 100 A1 und die nicht votveröffentlichten DE 10 2008 001 093 U1 und DE 10 2008 024321 A1 genannt.

Klebedübel bzw. Injektionsdübel für den Einsatz an Leichtbauplatten, die eine Mittellage aufweisen, sind an sich bekannt, so aus der WO 2006/106131 A1. Diese Art von Klebedübel sind insbesondere für den Einsatz in Leichtbauplatten mit einer Mittellage aus Papp- Waben-Strukturen geeignet. Solche Waben-Strukturen zeichnen sich dadurch aus, dass sie relativ große Luftkammern aufweisen.

Beim Herstellen einer Bohrung zum Einsetzen des Klebedübels wird bei diesen Wabenplatten mindestens eine Wabe geöffnet, so dass dem Klebstoff ausreichend Raum zum Ausbreiten innerhalb der Mittellage zur Verfügung steht Wird zuviel Klebstoff injiziert, so hat dies zunächst keine negativen Folgen; erst bei deutlicher Übermenge kann es passieren, dass überschüssiger Klebstoff aus der Platte oder aus dem Dübel herausgedrückt wird.

Werden Dübel der gattungsgemäßen WO 2006/106131 A1 jedoch in Leichtbauplatten mit einer Mittellage aus PU-Schaum oder ähnlichen Werkstoffen mit sehr kleinen Luftkammern angewendet, gestaltet sich die Dosierung des Klebstoffs schwierig, weil überschüssiger Klebstoff nicht ausweichen und daher schon bei dem geringsten Überschuss unkontrolliert aus dem Dübel gedrückt wird.

Insofern ergibt sich bei der WO 2006/106131 A1 ein Optimierungsbedarf für einen Einsatz in Leichtbauplatten mit feinporiger Mittellage. Insbesondere besteht das

Problem, dass die Bandbreite zwischen einer Unterdosierung (zu geringe Festigkeit) und einer Überdosierung (Klebstoff quillt aus Dübel heraus) des Klebstoffes relativ klein ist. Dies ist insbesondere bei einer manuellen Klebstoffzufuhr, z.B. mit einer Klebstoffpistole, nachteilig.

Die Erfindung hat die Aufgabe dieses Problem zu lösen.

Die Erfindung löst diese Aufgabe durch den Gegenstand des Anspruchs 1.

Hierdurch wird die Toleranz zwischen der Mindestklebstoffmenge und zu großer Klebstoffmenge vergrößert und dadurch die Montage- / Prozesssicherheit bei der Anwendung des Dübels erhöht.

Vorzugsweise wird der Klebstoff in entsprechend gestalteten Kanälen gezielt zunächst an die eine Deckschicht und dann an die andere Deckschicht geführt, so dass eine gute Verbindung des Dübels mit den Deckschichten und somit eine hohe Festigkeit gewährleistet wird.

Wird nun weiterer (zu viel) Klebstoff zugeführt, so wird dieser durch eine entsprechende Kanalführung in einen "Speicher" (Pufferraum genannt) geführt, der sich im mittleren Bereich (zwischen den beiden Deckschichten) des Klebedübels befindet. Der in diesen Speicher hinein gedrückte Klebstoff hat zwar keine Festigkeitswirkung mehr (die Verklebung mit der Mittellage z.B. aus PU-Schaum steigert die

Festigkeit nicht), hat jedoch auch keine schädliche Wirkung.

Damit verringert sich die Gefahr, dass eine zu große Klebstoffmenge aus der Leichtbauplatte herausgedrückt wird und auch die Gefahr, dass der Klebstoff durch Lufteinschlüsse aufgeschäumt wird.

Insgesamt ergibt sich eine Erhöhung der Prozesssicherheit (insbesondere aber nicht nur bei manueller Klebstoffdosierung).

Schließlich wird eine sehr gute Klebung mit einer nur relativ geringen Klebstoff menge erzielt, so dass eine sichere Verklebung mit kurzen Taktzeiten erreicht wird.

Die Erfindung schafft auch eine Leichtbauplatte mit einem Klebedübel nach einem der vorstehenden Ansprüche, vorzugsweise mit einer Zwischenschicht aus einem relativ feinporigen Schaummaterial.

Bei Leichtbauplatten weicht eine bzw. die Mittelschicht der Leichtbauplatten in ihren chemischen und / oder physikalischen Eigenschaften von den mindestens zwei Deckschichten ab. Derzeit sind Mittelschichten bekannt, die aus leichten Hölzern wie z.B. Balsa bestehen. Eine weitere Möglichkeit ist, die Mittelschicht aus Fasermaterialien wie z.B. Hanf- oder Strohfasern aufzubauen. Weiterhin können in der Mitteschicht Hohlräume wie z.B. bei Strangpress-Röhrenspanplatten oder Wabenplatten erzeugt werden. Außerdem kann die Dichte zwischen Mittelschicht und Decklagen variiert werden, um eine Leichtbauplatte zu erhalten. Denkbar ist auch, die Mittelschicht als Schaum auszuführen wie z.B. bei Schaumkernplatten. Weiterhin ist denkbar, zur Erhöhung der Stabilität zusätzlich weitere mit den physikalischen und / oder chemischen Eigenschaften der Deckplatten identische Zwischenplatten in das Verbundmaterial einzubringen. Des Weiteren ist dieses Verfahren für jegliche nach dem zuvor beschriebenen Konzept aufgebaute Leichtbauplatten geeignet. Die Deckplatten der Leichtbauplatten sind bevorzugt darauf ausgelegt Zug- und Druckbelastungen standzuhalten, die Mittelschicht hält bevorzugt Druckbelastungen stand.

Eine weitere Betrachtung kann aus Sicht eines Doppel-T Trägers wie er aus dem Maschinenbau bekannt ist, erfolgen. Die Mittelschicht einer Leichtbauplatte wirkt sich gemäß dieser Betrachtung weniger auf das Widerstandsmoment der Leichtbauplatte aus, als die Deckplatten.

Vorteilhafte Ausgestaltungen der Erfindung sind in den Unteransprüche angegeben.

Anhand der beiliegenden Zeichnungen wird die Erfindung anhand von Ausführungsbeispielen noch näher erläutert. Es zeigen:
- Figur 1a-e: verschiedene perspektivische Ansichten eines einteiligen Klebedübels und dessen Anordnung an einer Leichtbauplatte;
- Fig. 2: eine perspektivische Ansicht eines zweiten Klebedübels;
- Fig. 3: eine perspektivische Ansicht eines dritten Klebedübels;
- Figur 4a-b: verschiedene perspektivische Ansichten des Klebedübels aus Fig. 1 mit einer ersten Hülse; und
- Figur 5a-b: verschiedene perspektivische Ansichten des Klebedübels aus Fig. 1 mit einer zweiten Hülse.

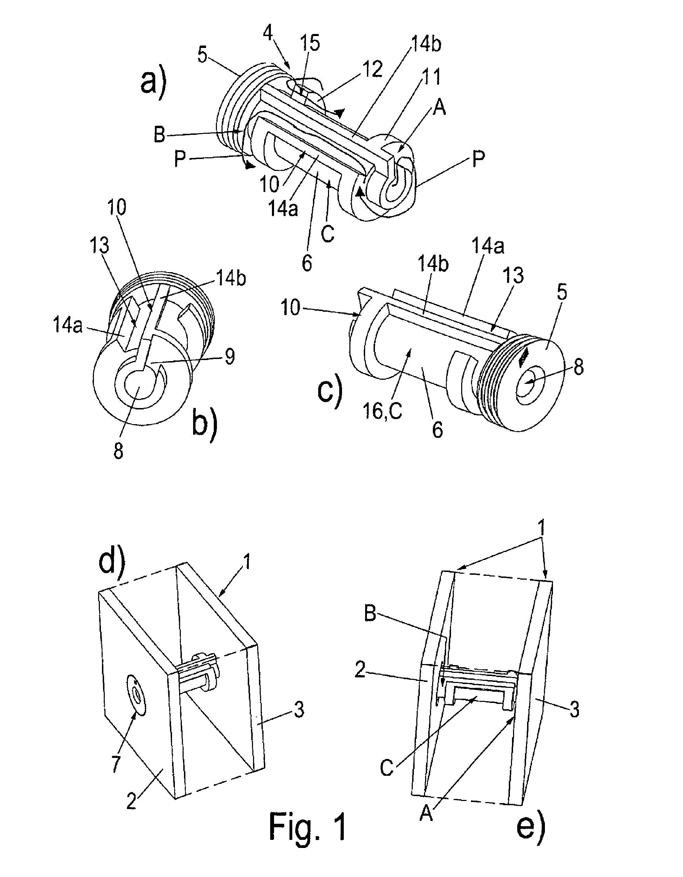

Die Figuren 1d und e zeigen die Anordnungen einer Leichtbauplatte 1 mit den Deckschichten 2, 3. Zwischen den Deckschichten 2, 3 ist eine die Deckschichten 2, 3 verbindende Zwischenschicht -Materiallage (gestrichelt im Bereich der Ecken der Leichtbauplatte 1 angedeutet) ausgebildet, die insbesondere aus einem relativ feinporigen Schaummaterial bestehen kann. Diese Materiallage ist in Fig. 1 der besseren Erkennbarkeit der Einbaulage ansonsten nicht dargestellt.

In die Leichtbauplatte 1 ist ein Klebedübel 4 eingesetzt. Der Klebedübel 4 ist als längliches, vorzugsweise zylindrisches Element ausgebildet, welches eine derartige Länge aufweist, dass es im montierten Zustand den Abstand zwischen den Deckschichten 2, 3 überbrückt.

Der Klebedübel 4 weist einen zylindrischen Kopf 5 auf, an welchem sich ein Schaftbereich 6 anschließt.

Der Kopf 5 ist zum Eingriff in eine korrespondierende Bohrung 7 in der Deckschicht 2 der Leichtbauplatte 1 ausgebildet. Der Schaft 6 liegt in dieser Einbaulage d e der Fig. 1d und e zwischen den Deckschichten 2, 3 und erstreckt sich in einer mit der Bohrung 7 fluchtenden Öffnung in der Zwischenschicht. Der Schaft 6 ist vorzugsweise derart bemessen, dass er sich bis unmittelbar an die Oberfläche der vom Kopf 5 in Einbaulage abgewandten Deckschicht 3 erstreckt.

Der Kopf 5 ist vorzugsweise an seiner Umfangsfläche profiliert ausgebildet, um einen guten Sitz in der Bohrung 7 zu gewährleisten.

Der Klebedübel 4 ist mit einem Klebstoffzuführkanal 8 versehen, welcher den Kopf 5 und den Schaft 6 axial durchsetzt. Nach einer bevorzugten Ausführung durchsetzt der Klebbstoffzuführkanal 8 den Klebedübel 4 auf seiner gesamten axialen Länge.

Der Schaft 6 weist einen Durchmesser auf, der kleiner ist als der Durchmesser des Kopfes 5.

An seinem vom Kopf 5 abgewandten Ende weist der Klebstoffzuführkanal 8 eine die Umfangswand des Schaftes radial durchsetzende Öffnung 9 auf.

Auf dem Außenumfang des Schaftes 6 ist eine Stegstruktur 10 ausgebildet, welche Kanäle zur Verteilung des Klebstoffes aufweist.

Die Stegstruktur 10 ist derart ausgebildet, dass Klebstoff, welcher durch den Klebstoffzuführkanal 8 zugeleitet wird, mittels der Stegstruktur 10 zunächst an die axialen Enden des Schaftes 6 geleitet wird, wo er sich jeweils in den Aufnahmeräumen A und B verteilen kann, bevor im Falle eines weiteren Zuleitens von Klebstoff dieser in einen zwischen den axialen Enden des Schaftes ausgebildeten Klebstoff-Pufferraum C geleitet wird.

Besonders bevorzugt ist die Stegstruktur 10 derart ausgebildet, dass der Klebstoff, welcher durch den Klebstoffzuführkanal 8 zugeleitet wird, mittels der Stegstruktur 10 zunächst an das vom Kopf 5 abgewandte Ende des Schaftes 6 in den Aufnahmeraum A geleitet wird und von dort weiter durch die Stegstruktur 10 zum anderen axialen Ende vor dem Kopf 5 in den Aufnahmeraum B und vom Aufnahmeraum B in den Pufferraum C.

Dies ist von Vorteil, da insbesondere in dem Fall, dass mehr Klebstoff injiziert wird, als es zum Auffüllen der Aufnahmeräume A und B an den axialen Enden des Schaftes 6 notwendig ist, dieser überschüssige Klebstoff in den Pufferraum C abfließen kann, der im mittleren Bereich axial zwischen den Aufnahmeräumen A und B angeordnet bzw. ausgebildet ist. Gerade bei dichteren Zwischenschichten könnte dieser Klebstoff nicht in den Bereich dieser Zwischenschicht abfließen, was - wie eingangs beschrieben - problematisch ist. Erfindungsgemäß ist es nicht mehr notwendig, die Klebstoffmenge ganz genau zu bemessen. Es muß lediglich sichergestellt werden, dass eine Mindestmenge zugeführt wird. Ein gewisses Überschreiten dieser Mindestmenge ist damit unschädlich.

Diese Ausgestaltung ist den Ausführungsformen sämtlicher Figuren gemeinsam.

Realisierbar ist diese Ausgestaltung auf verschiedenste Weise, wobei in den Figuren verschiedene bevorzugte Erfindungsvarianten gezeigt sind.

Nach den anliegenden Figuren weist die Stegstruktur 10 eine derartige Geometrie auf, dass aus der Öffnung 9 austretender Klebstoff an die an die beiden Deckschichten 2, 3 anschließenden Innenraumbereiche der Leichtbauplatte geleitet wird, derart, dass der Klebedübel im ausgehärteten Zustand des Klebstoffes in diesen Aufnahmeräumen A und B sicher in der Leichtbauplatte verankert ist, so das durch seinen Kopf 5 ein Befestigungselement, wie z.B. eine Schraube in den Schaft 6 eingebracht werden kann.

Nach Fig. 1 weist die Stegstruktur 10 hierzu wenigstens zwei nicht umfangsgeschlossen um den Außenumfang herum laufende und axial zueinander beabstandete Ringstege 11, 12 auf.

Die Öffnung 9 ist vom Kopf 5 aus gesehen hinter den beiden Ringstegen 11, 12 ausgebildet.

Diese Ringstege 11, 12 sind ferner jeweils zu der einen Deckschicht 2 mit dem Kopf 5 und der anderen gegenüberliegenden Deckschicht 3 in Einbaulage beabstandet ausgebildet, so dass jeweils zwischen dem Ringsteg 12 und dem Kopf 5 sowie der einen Deckschicht 2 auf der einen Seite der Leichtbauplatte 1 und zwischen dem anderen Ringsteg 11 und der anderen Deckschicht 3 auf der anderen Seite der Leichtbauplatte 1 die Klebstoffaufnahmeräume A und B ausgebildet werden.

Diese beiden Aufnahmeräume A und B sind durch einen Verbindungskanal 13 miteinander verbunden, der durch seitliche Verbindungsstege 14a, b begrenzt ist.

Einer der Verbindungsstege 14 a verbindet die beiden Ringstege 11, 12 axial miteinander und endet an diesen Ringstegen 11, 12.

Der andere der beiden Verbindungsstege 14b des Ausführungsbeispiels der Fig. 1 erstreckt sich dagegen über die Ringstege 11, 12 hinaus, vorzugsweise einerseits bis zum Kopf 5 und andererseits bis zum vom Kopf 5 abgewandt liegenden Ende des Schaftes 6.

Dabei ist die Öffnung 9 aus dem Schaft 6 in den Ringraum 14 an dem vom Kopf 5 abgewandten Ende des Klebedübels 4 vorzugsweise auf der von dem Verbindungskanal 13 abgewandten Seite des längeren Verbindungssteges 14 b ausgebildet.

Zudem erstreckt sich der näher zum Kopf 5 liegende Ringsteg 12 um den Außenumfang 8 herum laufend nicht ganz bis an diesen längeren Verbindungssteg 14b heran, so dass ein Spalt 15 gebildet wird, durch welchen Klebstoff aus dem Klebstoffaufnahmeraum B in den Bereich 16 zwischen den Ringstegen 11 und 12 fließen kann, der als der Pufferraum C für den Klebstoff dient.

Derart wird eine Klebstoffverteilungsstruktur im Klebedübel ausgebildet, mit welcher Klebstoff zunächst durch den Kopf 5 und den Schaft 6 durch den Klebbstoff zuführkanal 8 bis zur Öffnung 9 geführt wird, durch die Öffnung 9 (in Stegstruktur 10) in den Klebstoffaufnahmeraum A, von dort in den Klebstoffaufnahmeraum B und von dort dann, wenn noch weiter - also an sich zu viel - Klebstoff zugeleitet wird, in den Pufferraum C (Pfeil P).

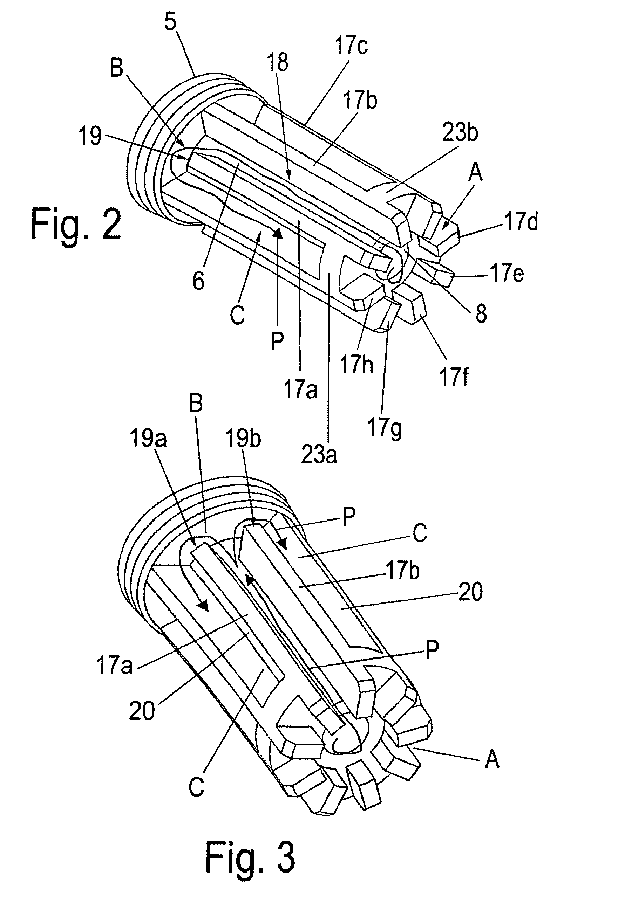

Nach Fig. 2 sind umfangsverteilt mehrere - beispielhaft acht - Verbindungsstege 17 a, b, c, ... vorgesehen. Diese Verbindungsstege 17 erstrecken sich axial über das Ende des Schaftes 6 hinaus, der entsprechend in der Einbaulage etwas weiter beabstandet von der Deckschicht 3 endet.

Der Klebstoffzuführkanal 8 mündet zwischen den axial über das Ende des Schaftes 6 vorstehenden Enden der Verbindungsstege 17a, ... gebildeten Aufnahmeraum A für Klebstoff, der axial durch einige am Außenumfang des Schaftes 6 umfangsverteilt angeordnete Ringsegmentstege 23a, b, ... begrenzt ist.

Dabei ist zumindest einer oder es sind mehrere Axial-Verbindungskanäle 18 zwischen den benachbarten Verbindungsstegen 17a, b, ohne Ringsegmentstege 23a, b ausgebildet.

Demgemäß fließt Klebstoff zunächst in den Aufnahmeraum A und dann durch den einen oder die Verbindungskanäle 18a, b, ... zum Ende des Schaftes 6 am Kopf 5, wo ein weiterer Klebstoffaufnahmeraum B gebildet wird.

Dadurch, dass sich einer (Fig. 2) der beiden Verbindungsstege 17a, b, die an den jeweiligen axial verlaufenden Verteilungskanal 18a, b, ... angrenzen, nicht ganz bis zum Kopf 5 erstreckt, wird hier ein Spalt 19 gebildet, durch welchen Klebstoff durchtreten kann, so dass sich einerseits der Klebstoff-Aufnahmeraum B am Kopf 5 bildet und andererseits eine Umlenkung in den Axialkanal 20a, b, der den Pufferraum C für Klebstoff ausbildet.

Das Ausführungsbeispiel der Fig. 3 entspricht dem der Fig. 2 bis auf das Merkmal, dass sich jeweils beide Verbindungsstege 17a, b, die an den jeweiligen axial verlaufenden Verteilungskanal 18a, b, ... angrenzen, nicht ganz bis zum Kopf 5 erstrecken, so dass sich zwei Spalten 19, die Spalten 19a, b, ...bilden, durch welche Klebstoff durchtreten kann, so dass sich einerseits der Klebstoff-Aufnahmeraum B am Kopf 5 bildet und andererseits eine Umlenkung in Axialkanäle 20, welche den Pufferraum C für Klebstoff ausbilden.

Dabei sind nach Fig. 2 und 3 jeweils vorzugsweise mehrere dieser Strukturen aus Verbindungsstegen 17 und Verteilungskanälen 18 sowie Spalten und Axialkanälen 20 am Umfang des Schaftes 6 verteilt.

Auch hier fließt der Klebstoff (Pfeil P) zunächst wieder erst durch den Schaft 6 in den Aufnahmeraum A am vom Kopf 5 abgewandten Ende des Schaftes 6, dann durch die Stegstruktur 10 zum Aufnahmeraum B am Kopf 5 und von dort in den Pufferraum C.

Wird (zu viel) Klebstoff zugeführt, so wird dieser durch eine entsprechende Kanalführung - vorzugsweise realisiert durch eine Stegstruktur am Außenumfang des Schaftes 6 in einen "Speicher`` - den Pufferraum C - geführt.

Der in diesen Pufferraum C hinein gedrückte Klebstoff hat zwar keine oder jedenfalls keine nennenswerte Festigkeitswirkung mehr (die Verklebung mit der Mittellage z.B. aus PU-Schaum steigert die Festigkeit in der Regel nicht), hat jedoch auch keine schädliche Wirkung. Die Funktion einer äußeren Hülse, wie sie in dem gattungsgemäßen Stand der Technik vorgeschlagen wird, übernimmt bei einer Leichtbauplatte mit einer genügend dichten Mittellage, z.B. bei einer PU-Schaumplatte als Mittellage, die Mittellage selbst. Entsprechend ist bei den Ausführungen der Fig. 1 bis 3 keine äußere, den Schaft 6 und die Stegstruktur 10 umgebende Hülse vorgesehen.

Der Klebedübel 4 kann derart auch an Platten oder Wänden eingesetzt werden, die nicht als Leichtbauplatten der beschriebenen Art ausgebildet sind.

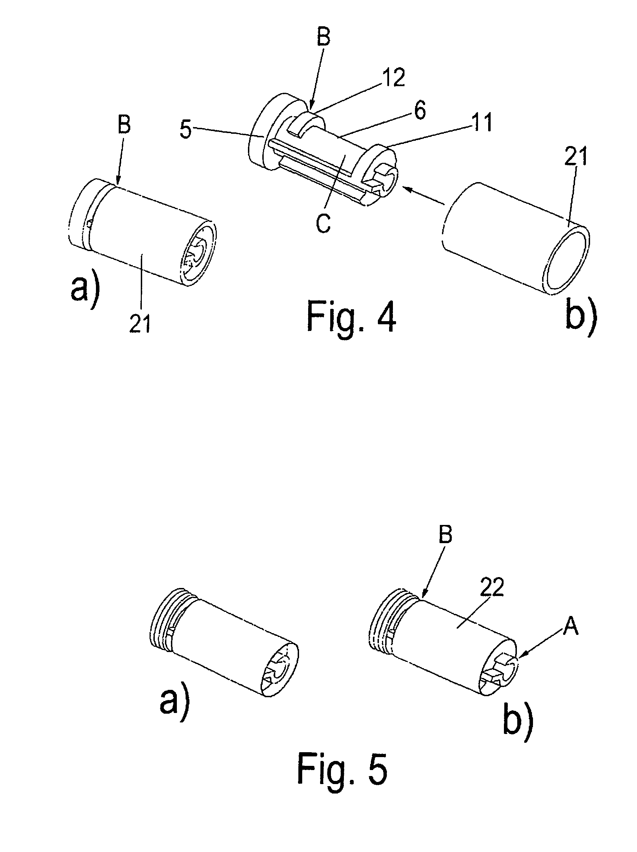

Wie in Fig. 4 oder 5 dargestellt, kann aber jedes der vorstehenden Ausführungsbeispiele auch der eigentliche innere Klebedübel mit einer äußeren Hülse versehen werden, die nach Fig. 4 als vorgefertigtes Hülsenelement 21 und nach Fig. 5 durch einen Mantel 22 aus Klebeband gebildet wird, wobei die Hülse nur den axialen Bereich des Pufferraums C, vorzugsweise aber nicht die Aufnahmeräume A und B, axial abdeckt.

Abschließend sei erwähnt, dass der innere Zuführkanal auch nicht bis in den Kopf führen, sondern in einem Reservoirbereich im Inneren des Klebedübels münden kann, in dem werksseitig bereits Klebstoff voreingefüllt wird. Nach dem Einsetzen in die Leichtbauplatte wird dieser Bereich geöffnet (z.B. durch axialen Druck durch eine Öffnung im Kopf, so dass z.B. eine dünne Wand durchbrochen wird, so dass der Klebstoff wie vorstehend beschrieben nach außen aus dem Schaft in die Stegstruktur 10 austreten und sich im Bereich der Stegstruktur 10 ausbreiten bzw. verteilen kann.

### Bezugszeichen

- Leichtbauplatte: 1
- Deckschichten: 2, 3
- Klebedübel: 4
- Kopf: 5
- Schaftbereich: 6
- Bohrung: 7
- Klebstoffzuführkanal: 8
- Öffnung: 9
- Stegstruktur: 10
- Ringstege: 11, 12
- Verbindungskanäle: 13a, b,
- Verbindungsstege: 14a, b,
- Spalt: 15
- Bereich: 16
- Verbindungsstege: 17 a, b, c,
- Verteilungskanäle: 18a,b,
- Spalt: 19a, b,
- Axialkanäle: 20a, b,
- Hülsenelement: 21
- Mantel: 22
- Ringsegmentstege: 23a, b,

- Aufnahmeraum: A
- Aufnahmeraum: B
- Pufferraum: C

## Patentansprüche

1. Klebedübel zum Einsetzen in eine Leichtbauplatte (1) mit Deckschichten (2, 3) und einer dazwischen angeordneten Zwischenschicht, vorzugsweise aus einem Schaummaterial, wobei der Klebedübel (4) einen Kopf (5) zum Eingriff in eine korrespondierende Bohrung (7) in einer der Deckschichten (2) der Leichtbauplatte (1) aufweist und einen sich daran axial anschließenden Schaftbereich (6) sowie einen Klebstoffzuführkanal (8), **dadurch gekennzeichnet, dass** Klebstoff, welcher durch den Klebstoffzuführkanal (8) zuleitbar ist, mittels einer Kanal- und/oder Stegstruktur (10) des Klebedübels zunächst gleichzeitig oder hintereinander an den beiden axialen Enden des Schaftes (6) in Aufnahmeräume (A und B) des Klebedübels verteilt wird, bevor im Falle eines weiteren Zuleitens von Klebstoff dieser in einen axial zwischen den Aufnahmeräumen (A und B) ausgebildeten Klebstoff Pufferraum (C) des Klebedübels überfließt.

2. Klebedübel nach Anspruch 1, **dadurch gekennzeichnet, dass** Klebstoff, welcher durch den Klebstoffzuführkanal (8) zugeleitet wird, mittels der Stegstruktur (10) zunächst an das vom Kopf (5) abgewandte Ende des Schaftes (6) in den Aufnahmeraum A geleitet wird und von dort weiter durch die Stegstruktur (10) zum anderen axialen Ende vor dem Kopf (5) in den Aufnahmeraum (B) und von dem Aufnahmeraum (B) in den Pufferraum (C).

3. Klebedübel nach Anspruch 1 oder 2, **dadurch gekennzeichnet, dass** der Klebstoffzufuhrkanal (8) den Kopf (5) und den Schaft (6) axial durchsetzt.

4. Klebedübel nach einem der vorstehenden Ansprüche, **dadurch gekennzeichnet, dass** der Schaft (6) einen Durchmesser aufweist, der kleiner ist als der Durchmesser des Kopfes (5).

5. Klebedübel nach einem der vorstehenden Ansprüche, **dadurch gekennzeichnet, dass** der Schaft (6) an seinem vom Kopf (5) abgewandten Ende eine die Umfangswand des Schaftes (6) radial durchsetzende Öffnung (9) aufweist.

6. Klebedübel nach einem der vorstehenden Ansprüche, **dadurch gekennzeichnet, dass** die Stegstruktur (10) ferner wenigstens zwei nicht umfangsgeschlossen um den Außenumfang herum laufende und axial zueinander beabstandete Ringstege (11, 12) aufweist, wobei die Ringstege (11, 12) ferner in Einbaulage jeweils zu der einen Deckschicht (2) mit dem Kopf (5) und der anderen gegenüberliegenden Deckschicht (3) beabstandet ausgebildet sind, so dass jeweils zwischen dem Ringsteg (12) und dem Kopf (5) sowie der einen Leichtbauplatte (2) und zwischen dem anderen Ringsteg (11) die Klebstoffaufnahmeräume (A und B) ausgebildet sind.

7. Klebedübel nach Anspruch 5 oder 6, **dadurch gekennzeichnet, dass** die Öffnung (9) vom Kopf (5) aus gesehen hinter den beiden Ringstegen (11, 12) ausgebildet ist.

8. Klebedübel nach einem der vorstehenden Ansprüche, **dadurch gekennzeichnet, dass** die beiden Aufnahmeräume (A und B) durch einen oder mehrere Verbindungskanäle (13) miteinander verbunden sind, wobei die ein oder mehreren Verbindungskanäle (13) jeweils durch seitliche Verbindungsstege (14a, b) begrenzt sind.

9. Klebedübel nach Anspruch 8, **dadurch gekennzeichnet, dass** einer der Verbindungsstege (14a) die beiden Ringstege (11, 12) axial miteinander verbindet und an diesen Ringstegen (11, 12) endet und dass sich der andere der beiden Verbindungsstege (14b) über die Ringstege (11, 12) hinaus erstreckt, vorzugsweise einerseits bis zum Kopf (5) und andererseits bis zum vom Kopf (5) abgewandt liegenden Ende des Schaftes (6).

10. Klebedübel nach Anspruch 9, **dadurch gekennzeichnet, dass** sich der näher zum Kopf (5) liegende Ringsteg (12) nicht ganz bis an diesen längeren Verbindungssteg (14b) heran erstreckt, so dass ein Spalt (15) gebildet wird, durch welchen Klebstoff aus dem Klebstoffaufnahmeraum (B) in den Bereich (16) zwischen den Ringstegen (11 und 12) fließt, der den Pufferraum (C) bildet.

11. Klebedübel nach einem der vorstehenden Ansprüche, **dadurch gekennzeichnet, dass** umfangsverteilt mehrere Verbindungsstege (17 a, b, c, ...) vorgesehen sind, die sich axial über das Ende des Schaftes (6) hinaus erstrecken, wobei der Zuführkanal (8) axial durch das axiale Ende des Schaftes (6) in den zwischen den axial über das Ende des Schaftes vorstehenden Enden der Verbindungsstege (17a, ...) gebildeten Aufnahmeraum (A) für Klebstoff mündet, der axial durch einige am Außenumfang des Schaftes (6) umfangsverteilt angeordnete Ringsegmentstege (23a, b, ...) begrenzt ist.

12. Klebedübel nach Anspruch 11, **dadurch gekennzeichnet, dass** einer oder mehrere Axial-Verbindungskanäle (18) zwischen den benachbarten Verbindungsstegen (17a, b) ausgebildet sind, zwischen welchen keine Ringsegmentstege (23a, b, ...) vorhanden sind.

13. Klebedübel nach einem der vorstehenden Ansprüche 11 oder 12, **dadurch gekennzeichnet, dass** sich einer oder beide der Verbindungsstege (17a, b), die an den jeweiligen axial verlaufenden Verteilungskanal (18a, b, ...) angrenzen, nicht ganz bis zum Kopf (5) erstreckt/erstrecken, so dass ein oder zwei Spalten (19a, b, ...) gebildet werden, durch welchen Klebstoff fließen kann, so dass sich einerseits der Aufnahmeraum (B) am Kopf (5) bildet und andererseits eine Umlenkung in einen oder zwei Axialkanäle (20a, b), die den Pufferraum (C) für Klebstoff ausbilden.

14. Klebedübel nach einem der vorstehenden Ansprüche 8 bis 13, **dadurch gekennzeichnet, dass** mehrere der Strukturen aus Verbindungsstegen (17) und Verteilungskanälen (18) sowie Spalten und Axialkanälen (20) am Umfang des Schaftes (6) verteilt sind.

15. Klebedübel nach einem der vorstehenden Ansprüche, **dadurch gekennzeichnet, dass** der Klebedübel in einem axialen Teilbereich mit einer äußeren Hülse versehen ist, die als vorgefertigtes Hülsenelement (21) oder als Mantel (22) aus Klebeband gebildet ist.

16. Leichtbauplatte mit einem Klebedübel nach einem der vorstehenden Ansprüche.

## Claims

1. Adhesive dowel for installation into a light-weight building board (1) having cover layers (2, 3) and an intermediate layer, preferably made of a foam material, arranged in between, wherein the adhesive dowel (4) comprises a head (5) for engagement with a corresponding hole (7) in one of the cover layers (2) of the light-weight building board (1), an axially adjoining shank section (6) and an adhesive supply passage (8), **characterised in that** the adhesive which can be supplied through the adhesive supply passage (8) is first simultaneously or sequentially distributed at the two axial ends of the shank (6) into receiving spaces (A and B) of the adhesive dowel by means of a passage and/or web structure (10) of the adhesive dowel, before, if any further adhesive is supplied, this adhesive flows over into an adhesive buffer space (C) of the adhesive dowel which is formed between the receiving spaces (A and B).

2. Adhesive dowel according to claim 1, **characterised in that** the adhesive supplied through the adhesive supply passage (8) is, by means of the web structure (10), first directed to the end of the shank (6) remote from the head (5) into the receiving space (A) and from there through the web structure (10) to the other axial end in front of the head (5) into the receiving space (B) and from the receiving space (B) into the buffer space (C).

3. Adhesive dowel according to claim 1 or 2, **characterised in that** the adhesive supply passage (8) axially passes through the head (5) and the shank (6).

4. Adhesive dowel according to any of the preceding claims, **characterised in that** the shank (6) has a diameter which is smaller than the diameter of the head (5).

5. Adhesive dowel according to any of the preceding claims, **characterised in that** the shank (6) has an opening (9) extending radially through the circumferential wall of the shank (6) at the end remote from the head (5).

6. Adhesive dowel according to any of the preceding claims, **characterised in that** the web structure (10) further comprises at least two annular webs (11, 12) which are not continuous circumferentially, which run around the external circumference and which are axially spaced from one another, wherein the annular webs (11, 12) are further in the installed position placed at a distance from the one cover layer (2) with the head (5) and from the other cover layer (3), so that the adhesive receiving spaces (A and B) are respectively formed between the annular web (12) and the head (5) and between the one light-weight building board (2) and the other annular web (11).

7. Adhesive dowel according to claim 5 or 6, **characterised in that** the opening (9) is formed behind the two annular webs (11, 12) if viewed from the direction of the head (5).

8. Adhesive dowel according to any of the preceding claims, **characterised in that** the two receiving spaces (A and B) are connected to each other by one or more connecting passages (13), each of the one or more connecting passages (13) being bounded by lateral connecting webs (14a, b).

9. Adhesive dowel according to claim 8, **characterised in that** one of the connecting webs (14a) axially joins the two annular webs (11, 12) to each other and terminates at the said annular webs (11, 12), and **in that** the other of the connecting webs (14b) extends beyond the annular webs (11, 12), preferably as far as the head (5) at one end and as far as the end of the shank (6) which is remote from the head (5) at the other end.

10. Adhesive dowel according to claim 9, **characterised in that** the annular web (12) which is closer to the head (5) does not extend fully up to the longer connecting web (14b), so that a gap (15) is formed through which adhesive flows from the adhesive receiving space (B) into the region (16) between the annular webs (11 and 12) which forms the buffer space (C).

11. Adhesive dowel according to any of the preceding claims, **characterised in that** a plurality of connecting webs (17a, b, c, ...) which axially extend beyond the end of the shank (6) is provided, wherein the supply passage (8) axially terminates through the axial end of the shank (6) into the receiving space (A) for adhesive, which is formed between the ends of the connecting webs (17a, ...) axially extending beyond the end of the shank and which is axially bounded by several annular segment webs (23a, b, ...) distributed along the external circumference of the shank (6).

12. Adhesive dowel according to claim 11, **characterised in that** one or more axial connecting passages (18) is/are formed between the adjacent connecting webs (17a, b) between which there are no annular segment webs (23a, b, ...).

13. Adhesive dowel according to claim 11 or 12, **characterised in that** one or both of the connecting webs (17a, b) which adjoin the respective axial distribution passage (18a, b, ...) does/do not extend fully up to the head (5), so that one or two gap(s) (19a, b, ...) is/are formed through which adhesive can flow, so that the receiving space (B) at the head (5) is formed on the one hand and a diversion into one or two axial passages (20a, b) which form the buffer space (C) for adhesive is formed on the other hand.

14. Adhesive dowel according to any of claims 8 to 13, **characterised in that** several of the structures comprising the connecting webs (17) and the distribution passages (18) as well as gaps and axial passages (20) are distributed along the circumference of the shank (6).

15. Adhesive dowel according to any of the preceding claims, **characterised in that** an axial subsection of the adhesive dowel is provided with an external sleeve which is designed as a prefabricated sleeve element (21) or a sheath (22) of adhesive tape.

16. Light-weight building board provided with an adhesive dowel according to any of the preceding claims.

## Revendications

1. Cheville adhésive à insérer dans un panneau de construction léger (1) doté de couches de recouvrement (2, 3) et d'une couche intermédiaire intercalée, de préférence composée d'un matériau alvéolaire, sachant que la cheville adhésive (4) présente une tête (5) venant en prise avec un alésage (7) correspondant dans une des couches de recouvrement (2) du panneau de construction léger (1), et une zone de tige (6) raccordée à ce dernier de manière axiale ainsi qu'un canal d'amenée de colle (8), **caractérisée en ce que** la colle, qui peut être conduite par le canal d'amenée de colle (8), est répartie tout d'abord de manière simultanée ou l'une après l'autre au niveau des deux extrémités axiales de la tige (6) dans des espaces de réception (A et B) de la cheville adhésive au moyen d'une structure de canal et/ou de traverse (10) de la cheville adhésive, avant qu'en cas d'arrivée de colle supplémentaire, celle-ci ne se déverse dans un espace tampon (C) pour colle de la cheville adhésive, réalisé de manière axiale entre les espaces de réception (A et B).

2. Cheville adhésive selon la revendication 1, **caractérisée en ce que** la colle, qui est amenée par le canal d'amenée de colle (8), est conduite tout d'abord au niveau de l'extrémité de la tige (6), opposée à la tête (5), dans l'espace de réception (A) au moyen de la structure de traverse (10), et est conduite de là par la structure de traverse (10) vers l'autre extrémité axiale avant la tête (5) dans l'espace de réception (B), et de l'espace de réception (B) dans l'espace tampon (C).

3. Cheville adhésive selon la revendication 1 ou 2, **caractérisée en ce que** le canal d'amenée de colle (8) traverse de manière axiale la tête (5) et la tige (6).

4. Cheville adhésive selon l'une quelconque des revendications précédentes, **caractérisée en ce que** la tige (6) présente un diamètre qui est inférieur au diamètre de la tête (5).

5. Cheville adhésive selon l'une quelconque des revendications précédentes, **caractérisée en ce que** la tige (6) présente au niveau de son extrémité opposée à la tête (5), un orifice (9) traversant de manière radiale la paroi périphérique de la tige (6).

6. Cheville adhésive selon l'une quelconque des revendications précédentes, **caractérisée en ce que** la structure de traverse (10) présente en outre au moins deux traverses annulaires (11, 12) s'étendant en partie sans se fermer sur la périphérie extérieure et espacées l'une de l'autre de manière axiale, sachant que les traverses annulaires (11, 12) sont en outre réalisées, lorsqu'elles sont montées, respectivement de manière espacée de l'une des couches de recouvrement (2) comportant la tête (5) et de l'autre couche de recouvrement (3) opposée de sorte que les espaces de réception de colle (A et B) sont réalisés respectivement entre la traverse annulaire (12) et la tête (5) ainsi qu'entre un des panneaux de construction légers (2) et l'autre traverse annulaire (11).

7. Cheville adhésive selon la revendication 5 ou 6, **caractérisée en ce que** l'orifice (9) est réalisé, vu depuis la tête (5), derrière les deux traverses annulaires (11, 12).

8. Cheville adhésive selon l'une quelconque des revendications précédentes, **caractérisée en ce que** les deux espaces de réception (A et B) sont reliés l'un à l'autre par un ou plusieurs canaux de liaison (13), sachant qu'un ou plusieurs canaux de liaison (13) sont délimités respectivement par des traverses de liaison latérales (14a, b).

9. Cheville adhésive selon la revendication 8, **caractérisée en ce que** l'une des traverses de liaison (14a) relie entre elles de manière axiale les deux traverses annulaires (11, 12), et aboutissent au niveau desdites traverses annulaires (11, 12), et **en ce que** l'autre des deux traverses de liaison (14b) s'étend au-delà des traverses annulaires (11, 12), de préférence d'un côté jusqu'à la tête (5) et de l'autre côté jusqu'à l'extrémité de la tige (6) opposée à la tête (5).

10. Cheville adhésive selon la revendication 9, **caractérisée en ce que** la traverse annulaire (12) se trouvant le plus à proximité de la tête (5) ne s'étend pas entièrement jusqu'à ladite traverse de liaison (14b) la plus longue de sorte qu'une fente (15) est formée, par laquelle la colle s'écoule hors de l'espace de réception de colle (B) dans la zone (16) entre les traverses annulaires (11 et 12), laquelle zone constitue l'espace tampon (C).

11. Cheville adhésive selon l'une quelconque des revendications précédentes, **caractérisée en ce que** plusieurs traverses de liaison (17a, b, c...) sont prévues de manière répartie sur la périphérie, lesquelles s'étendent de manière axiale au-delà de l'extrémité de la tige (6), sachant que le canal d'amenée (8) débouche de manière axiale par l'extrémité axiale de la tige (6), dans l'espace de réception (A) pour colle, formé entre les extrémités des traverses de liaison (17a, ...) faisant saillie de manière axiale de l'extrémité de la tige, lequel espace de réception est délimité de manière axiale par quelques traverses de segments annulaires (23a, b...) disposées de manière répartie sur la périphérie au niveau de la périphérie extérieure de la tige (6).

12. Cheville adhésive selon la revendication 11, **caractérisée en ce que** l'un ou plusieurs des canaux de liaison axiaux (18) sont réalisés entre les traverses de liaison (17a, b) adjacentes, entre lesquelles ne se trouve aucune traverse de segment annulaire (23a, b...).

13. Cheville adhésive selon l'une quelconque des revendications précédentes 11 ou 12, **caractérisée en ce que** l'une ou les deux traverses de liaison (17a, b), qui jouxtent le canal de répartition (18a, b...) respectif s'étendant de manière axiale, ne s'étend/s'étendent pas complètement jusqu'à la tête (5) de sorte qu'une ou deux fentes (19a, b...) est/sont formée(s), par laquelle/lesquelles la colle peut s'écouler de sorte que d'un côté l'espace de réception (B) est formé au niveau de la tête (5) et que de l'autre côté une déviation est formée dans un ou deux canaux axiaux (20a, b), lesquels réalisent l'espace tampon (C) pour la colle.

14. Cheville adhésive selon l'une quelconque des revendications précédentes 8 à 13, **caractérisée en ce que** plusieurs des structures constituées de traverses de liaison (17) et de canaux de répartition (18) ainsi que de fentes et de canaux axiaux (20) sont réparties sur la périphérie de la tige (6).

15. Cheville adhésive selon l'une quelconque des revendications précédentes, **caractérisée en ce que** la cheville adhésive est pourvue dans une zone partielle axiale d'un manchon extérieur, qui est formé à partir d'un ruban adhésif comme élément à manchon (21) préfabriqué ou comme gaine (22).

16. Panneau de construction léger doté d'une cheville adhésive selon l'une quelconque des revendications précédentes.
